# EUROPÄISCHE PATENTANMELDUNG

(11) **EP 4 752 770 A1**
(43) Veröffentlichungstag der Anmeldung: **03.06.2026**
(21) Anmeldenummer: 24216896.1
(22) Anmeldetag: 02.12.2024
(51) Int. Cl.: G06F 21/62, G06F 21/78

(54) **ZUGANGSSTEUERUNG ZU GESCHUETZTEN DATENBEREICHEN**

(71) Anmelder: Bremer, Wiebke, 21335 Lüneburg (DE)
(72) Erfinder: WANECK, Peter, 6315 Oberägeri (CH)
(74) Vertreter: SONN Patentanwälte GmbH & Co KG

(57) **Zusammenfassung**

Computerimplementiertes Verfahren zur Zugangssteuerung zu geschützten Datenbereichen auf einem Speichermedium, das Verfahren umfassend die folgenden Schritte:
- Empfangen eines Authentifizierungsmerkmals (4);
- Suchen nach einem geschützten Datenbereich (6, 7), der dem empfangenen Authentifizierungsmerkmal (4) zugeordnet ist, auf dem Speichermedium;
- Feststellen, dass dem empfangenem Authentifizierungsmerkmal (4) kein geschützter Datenbereich (6, 7) zugeordnet ist;
- Initialisieren eines neuen geschützten Datenbereichs (8); und
- Zulassen des Zugriffs auf den neu initialisierten geschützten Datenbereich (8).

## Beschreibung

Die Erfindung betrifft ein computerimplementiertes Verfahren zur Zugangssteuerung zu geschützten Datenbereichen auf einem Speichermedium. Außerdem betrifft die Erfindung die Verwendung eines solchen Verfahrens für die Zugangssteuerung zu Benutzerdaten einer Anwendung auf einem Endgerät. Weiters betrifft die Erfindung auch ein Endgerät umfassend ein Speichermedium mit mindestens einem geschützten Datenbereich, wobei dem mindestens einen geschützten Datenbereich jeweils ein Authentifizierungsmerkmal zugeordnet ist.

Ein Verfahren der eingangs genannten Art umfasst typischerweise die folgenden Schritte:
- Empfangen eines Authentifizierungsmerkmals;
- Suchen nach einem geschützten Datenbereich, der dem empfangenen Authentifizierungsmerkmal zugeordnet ist, auf dem Speichermedium; und
- Feststellen, dass dem empfangenem
Authentifizierungsmerkmal kein geschützter Datenbereich zugeordnet ist.

Diese Schritte betreffen den Anwendungsfall, dass das eingegebene oder empfangene Authentifizierungsmerkmal ungültig ist. Die übliche Zugangssteuerung erfolgt z.B. über passwort-, hardwaregestützte oder biometrische Verfahren, um nach Prüfung Zugang zu gewähren oder den Zugang zu verwehren.

Bei herkömmlichen Verfahren wird nach der Eingabe eines ungültigen Authentifizierungsmerkmals (z.B. eines falschen Passworts) der Benutzer über diesen Umstand eindeutig informiert. Oft wird z.B. eine Fehlermeldung "Passwort ungültig" oder ähnliches ausgegeben; es kommen auch grafische oder haptische Hinweise vor; meist gelangt der Benutzer wieder zur Eingabe eines Authentifizierungsmerkmals (was an sich auch eine ungültige Eingabe eindeutig erkennen lässt).

Der Nachteil dieser Verfahren liegt darin, dass nicht nur dem Benutzer, sondern auch Dritten die Information über die Gültigkeit des Authentifizierungsmerkmals mitgeteilt wird. Beispielsweise im Fall einer erzwungenen Authentifizierung oder im Fall des Ausprobierens verschiedener Passwörter durch einen unberechtigten Dritten.

Es ist eine Aufgabe der Erfindung, diese Nachteile des Standes der Technik zu beseitigen oder zumindest zu lindern.

Die Erfindung sieht ein Verfahren vor, bei dem nach der Feststellung, dass dem empfangenem Authentifizierungsmerkmal kein geschützter Datenbereich zugeordnet ist, folgende Schritte nachfolgen: Initialisieren eines neuen geschützten Datenbereichs; und Zulassen des Zugriffs auf den neu initialisierten geschützten Datenbereich.

In entsprechender Weise sieht die Erfindung eine Verwendung eines solchen Verfahrens vor, wobei beim Starten der Anwendung das Authentifizierungsmerkmal eingegeben wird und die Anwendung Benutzerdaten aus jenem geschützten Datenbereich lädt, auf den der Zugriff zugelassen wurde.

Weiters und ebenfalls entsprechend ist bei einem erfindungsgemäßen Endgerät vorgesehen, dass die verschiedenen geschützten Datenbereichen zugeordneten Authentifizierungsmerkmale verschieden sind, wobei das Endgerät eingerichtet ist, beim Empfangen eines Authentifizierungsmerkmals, das keinem der geschützten Datenbereiche auf dem Speichermedium zugeordnet ist, einen neuen geschützten Datenbereich zu initialisieren und einen Zugriff auf den neu initialisierten geschützten Datenbereich zuzulassen.

Diese Offenbarung grenzt sich von den herkömmlichen Verfahren gravierend ab, dreht sie doch das Authentifizierungsverfahren um: symbolisch gesprochen definiert nicht der Schlüssel, ob das Schloss den Safe öffnet oder nicht, sondern der Schlüssel definiert, auf welchen Safe auf dem Endgerät zugegriffen wird.

Der Nutzer verschlüsselt beispielsweise mit Passwort "A" schützenswerte Daten und erhält bei Eingabe von Passwort "A" Zugriff auf diese. Gibt er jedoch Passwort "B" ein, erscheint keine Fehlermeldung, sondern es werden schützenswerte Daten bzw. geschützter Speicherplatz geschaffen; die mit Passwort "A" geschützten Daten bleiben dabei unberührt und unzugänglich.

Auf diesem Wege wird eine erzwungene Herausgabe des Passwortes für jemanden, der keine Informationen über die geschützten Daten hat, erschwert: dadurch dass der Prozess aus sich heraus keine "falschen" Passwörter kennt und folglich keine Unterscheidung zwischen "richtigen" und "falschen" Passwörtern ermöglicht, kann weder der Passwort-Wissende gezwungen werden das "richtige" Passwort zu geben noch kann ein Algorythmus über try-and-error sich dem Passwort über Rechenleistung nähern da es keine Fehlermeldung gibt.

Das Endgerät kann ein Computer, Terminal, insbesondere ein mobiles Endgerät, z.B. ein Smartphone oder ein Tabletcomputer, sein oder auch jeder sonstige Speicherort sein, z.B. ein mobiler Datenspeicher, USB-Speicher, oder berührungslos auslesbarer Speicher.

Eine Zugangssteuerung steuert im Wesentlichen, ob und zu welchen Daten ein Benutzer Zugang hat. Eine typische Zugangssteuerung unterscheidet zwischen einem gesperrten Zugang und einem uneingeschränkten Zugang. Als Zugangssperre können beispielsweise ein oder mehrere Authentifizierungsmerkmale, wie ein Passwort oder biometrisches Merkmal, verwendet werden, wobei die Zugangssperre nur durch eine korrekte Eingabe des Benutzers aufgehoben werden kann. Bei aufrechter Zugangssperre (gesperrtem Zugang) ist im einfachsten Fall der Zugang zu sämtlichen Daten (d.h. privaten und sonstigen Daten) am Endgerät oder sämtlichen Daten in einem gesicherten Bereich des Endgerätes gesperrt.

Gemäß einer Variante des offenbarten Verfahrens kann gleichzeitig mit dem Zulassen des Zugriffs auf den neu initialisierten geschützten Datenbereich ein Zugriff auf einen gemeinsamen Datenbereich auf dem Speichermedium zugelassen werden. Eine Ausführungsform davon sind teilweise Zugangssperren, die zwischen verschiedenen Zugangsstufen unterscheiden und beispielsweise einen ersten Teil der Daten (die sonstigen Daten) auch bei teilweise aufrechter Zugangssperre zugänglich machen und nur einen zweiten Teil der Daten (die privaten Daten) schützen, sodass dieser zweite Teil nur bei vollständig aufgehobener Zugangssperre zugänglich wird. Mit anderen Worten ist der Zugang bei nur teilweise aufgehobener Zugangssperre weiterhin eingeschränkt, nämlich auf die sonstigen Daten, ohne die privaten Daten. Erst bei vollständig aufgehobener Zugangssperre ist der Zugang uneingeschränkt, nämlich auf sämtliche Daten, möglich. Die Differenzierung der Zugangsstufen kann über verschiedenen Authentifizierungsmerkmale erreicht werden, z.B. Passwort "A" für den eingeschränkten Zugang und Passwort "B" für den uneingeschränkten Zugang, oder auch über mehrere Authentifizierungsmerkmale, von denen etwa nur ein erster Teil erforderlich ist, um die Zugangssperre teilweise aufzuheben, und erst bei zusätzlicher Eingabe eines zweiten Teils die Zugangssperre vollständig aufgehoben wird. Diese Teile können Authentifizierungsmerkmale verschiedenen Typs sein (z.B. ein biometrisches Merkmal als erster Teil und ein Passwort als zweiter Teil) oder es können Teile desselben Typs sein (z.B. bereits ein bestimmter Teil des Passworts hebt die Zugangssperre teilweise auf, aber nur das vollständige Passwort hebt die Zugangssperre vollständig auf).

Das offenbarte Speichermedium kann somit zusätzlich zum geschützten Datenbereich einen gemeinsamen Datenbereich aufweisen, wobei das Endgerät eingerichtet sein kann, beim Empfangen eines keinem der geschützten Datenbereiche auf dem Speichermedium zugeordneten Authentifizierungsmerkmals einen neuen geschützten Datenbereich zu initialisieren und einen Zugriff auf den neu initialisierten geschützten Datenbereich und auf den gemeinsamen Datenbereich zuzulassen.

Optional können der gemeinsame Datenbereich und alle geschützten Datenbereiche auf dem Speichermedium verschlüsselt gespeichert sein. Im Allgemeinen kann der neue geschützte Datenbereich verschlüsselt gespeichert sein und weitere - geschützte oder gemeinsame - Datenbereiche können optional ebenfalls verschlüsselt gespeichert werden. Vorzugsweise ist das gesamte Speichermedium verschlüsselt, sodass sich die Datenbereiche nicht ohne Kenntnis der Schlüssel überhaupt erkennen lassen (d.h. in ihrer Existenz), geschweige denn auslesen lassen.

Dementsprechend kann bei dem hier offenbarten Endgerät der mindestens eine geschützte Datenbereich des Speichermediums optional verschlüsselt sein. Ebenfalls kann der gemeinsame Datenbereich des Speichermediums optional verschlüsselt sein. Gemäß einer speziellen Variante des Endgeräts kann ein Schlüssel zum Entschlüsseln eines geschützten Datenbereichs aus dem diesem Datenbereich zugeordneten Authentifizierungsmerkmal ableitbar sein.

Unabhängig davon, ob damit verschiedene Zugangsstufen erreicht werden oder komplett getrennte Zugänge (d.h. ohne geteilte Daten), kann bei dem hier offenbarten Verfahren die Eingabe oder Übermittlung des Authentifizierungsmerkmals gleichzeitig beispielsweise zur Auswahl der Verschlüsselung oder des Verschlüsselungsbereiches werden; d.h. wenn der Schutz des oder der geschützten Datenbereiche (unter anderem) mittels Verschlüsselung erreicht wird. Es kann somit sichergestellt werden, dass es keine Möglichkeit gibt, den Passwortschutz wissend zu umgehen (zumindest nicht ohne zusätzliche Informationen über den gesuchten Datenbereich): weder kann die erzwungene Herausgabe eines Passwortes mangels Fehlermeldung verifiziert werden noch kann über Rechenleistung und Versuch- und-Irrtum ein zuverlässiger Weg definiert werden, das "richtige" Passwort zu erraten. Der Benutzer hat beispielsweise nach Eingabe jedes möglichen Passwortes Zugang zu jenen Daten, die für dieses Passwort geschaffen oder mit diesem spezifischen Passwort geschützt wurden, und (optional) zu den sonstigen, nicht als privat markierten, Daten, welche auf dem Endgerät gespeichert sind.

Eine zufällig korrekte Eingabe des Passwortes kann durch die gewählte Komplexität des Passwortes und die Einmaligkeit des Versuches (weil der Angreifer schon beim ersten Versuch - so wie bei jedem Versuch - meint, das Passwort bereits richtig erraten zu haben) statistisch ausgeschlossen werden.

Der bei dem offenbarten Verfahren erstellte, neue geschützte Datenbereich kann optional entsprechend einer Datenbereichsvorlage initialisiert werden. Eine Datenbereichsvorlage kann beispielsweise genügend und plausible Daten enthalten, um den Datenbereich nicht als leer erscheinen zu lassen. Ein leerer Datenbereich wäre in manchen Situationen unplausibel, weil offensichtlich kein Wert damit verbunden sein kann. Eine geeignete Datenbereichsvorlage mit nicht offensichtlich wertlosen Informationen kann ein plausibles Abstreiten von weiteren Informationen erlauben.

Das Authentifizierungsmerkmal kann beispielsweise ein Passwort, ein geheimer Schlüssel oder ein biometrisches Merkmal sein. Im Allgemeinen kann anstelle eines Authentifizierungsmerkmals auch eine Gruppe von Authentifizierungsmerkmalen (mit oder ohne vorgegebener Reihenfolge) verwendet werden und einem geschützten Datenbereich zugeordnet sein.

Beispielsweise kann bei einer Variante des offenbarten Verfahrens vor dem Zulassen des Zugriffs ein weiteres Authentifizierungsmerkmal empfangen und mit einem gemeinsamen Authentifizierungsmerkmal verglichen und eine Übereinstimmung festgestellt werden. Das gemeinsame Authentifizierungsmerkmal kann beispielsweise einen gemeinsamen Datenbereich schützen und durch verschiedene Passwörter erfüllbar sein; d.h. dieser geschützte Datenbereich ist mehreren alternativen Authentifizierungsmerkmalen zugeordnet. Wenn eines davon festgestellt wird, wird der Zugriff zugelassen.

Gemäß einer Ausführungsform der offenbarten Verwendung kann das Verfahren für die Zugangssteuerung zu Benutzerdaten eines Betriebssystems eines Endgeräts eingesetzt werden, wobei beim Starten des Betriebssystems das Authentifizierungsmerkmal eingegeben wird und das Betriebssystem Benutzerdaten aus jenem geschützten Datenbereich lädt, auf den der Zugriff zugelassen wurde. Falls dem eingegebenen Authentifizierungsmerkmal kein existierender geschützter Datenbereich zugeordnet ist, wird ein neuer, für das Starten des Betriebssystems geeigneter geschützter Datenbereich initialisiert und von dort gestartet.

Die Erfindung wird nachfolgend anhand von besonders bevorzugten Ausführungsbeispielen, auf die sie jedoch nicht beschränkt sein soll, und unter Bezugnahme auf die Zeichnungen noch weiter erläutert. Dabei zeigen im Einzelnen:
Fig. 1 schematisch den Ablauf einer einfachen Variante des erfindungsgemäßen Verfahrens;
Fig. 2 schematisch den Prozess des erfindungsgemäßen Verfahrens;
Fig. 3 schematisch die unterschiedlichen Varianten des geschützten Datenbereiches;
Fig. 4 schematisch eine weitere Variante des geschützten Datenbereichs; und
Fig. 5 und Fig. 5a den Zugriff auf geschützte Inhalte auf übliche Weise im Vergleich zu Fig. 6a und Fig. 6b mit dem Zugriff auf geschützte Inhalte auf dem hier beschriebenen Wege.

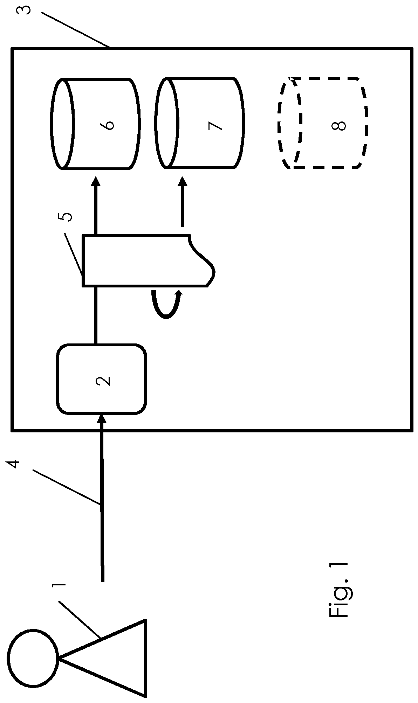

Fig. 1 zeigt beispielhaft eine einfache Variante des offenbarten Verfahrens. Ein Nutzer 1 gibt an einem Eingabefeld 2 eines Geräts 3 mit einem Speichermedium und einer Zugangssteuerung ein Passwort als Authentifizierungsmerkmal 4 ein (z.B. über ein Ziffernfeld oder eine Tastatur). Ein Authentifizierungsmodul 5 des Geräts 3 empfängt das Authentifizierungsmerkmal 4 und sucht nach einem geschützten Datenbereich 6, 7, der dem empfangenen Authentifizierungsmerkmal 4 zugeordnet ist, auf dem Speichermedium. Wenn festgestellt wird, dass dem empfangenem Authentifizierungsmerkmal 4 kein geschützter Datenbereich zugeordnet ist, wird ein neuer geschützter Datenbereich 8 initialisiert und dem empfangenem Authentifizierungsmerkmal 4 zugeordnet. Anschließend wird dem Nutzer 1 der Zugriff zu dem (nunmehr) zugeordneten geschützten Datenbereich 6, 7, 8 gewährt. Die geschützten Datenbereiche 6, 7, 8 sind auf dem Speichermedium verschlüsselt gespeichert.

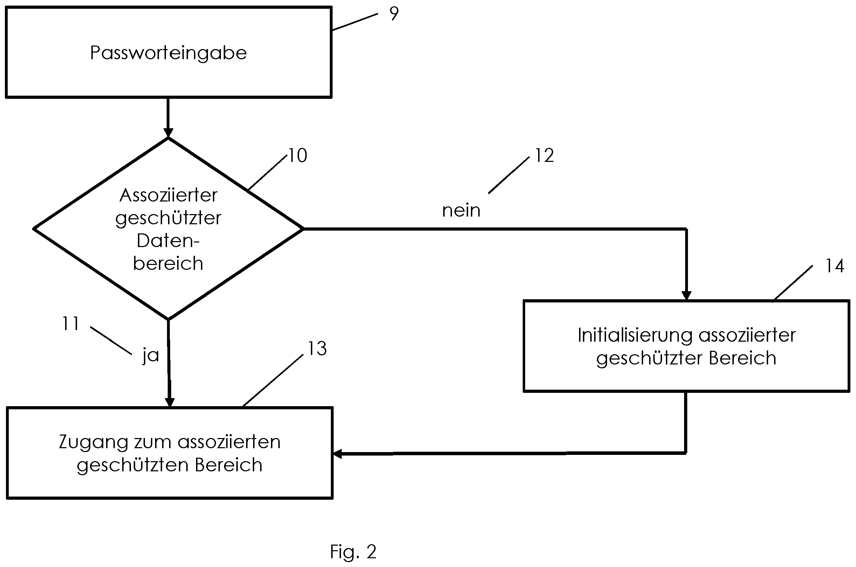

Fig. 2 illustriert das im Zusammenhang mit Fig. 1 beschriebene Verfahren in Form eines allgemeinen Ablaufdiagramms. Die Passworteingabe 9 löst eine Prüfung und Suche nach einem geschützten Datenbereich aus, der dem eingegebenen Authentifizierungsmerkmal 4 zugeordnet oder mit diesem assoziiert ist. Das Ergebnis dieser Suche beantwortet die Frage 10, ob ein zugeordneter geschützter Datenbereich gefunden wurde und je nach der Antwort verzweigt sich das Verfahren in "ja" 11 und "nein" 12. Wenn ein zugeordneter geschützter Datenbereich gefunden wurde ("ja"), wird im letzten Schritt der Zugang hierzu gewährt 13. Im anderen Fall wird zunächst ein neuer geschützter Datenbereich erzeugt und initialisiert 14 und dem eingegebenen Authentifizierungsmerkmal 4 zugeordnet. Anschließend wird auch in diesem Fall das Verfahren mit dem letzten Schritt 13 fortgesetzt. D.h. es wird in diesem einfachen Beispiel immer, unabhängig vom Inhalt des eingegebenen Authentifizierungsmerkmals 4, ein Zugang zu einem geschützten Datenbereich zugelassen.

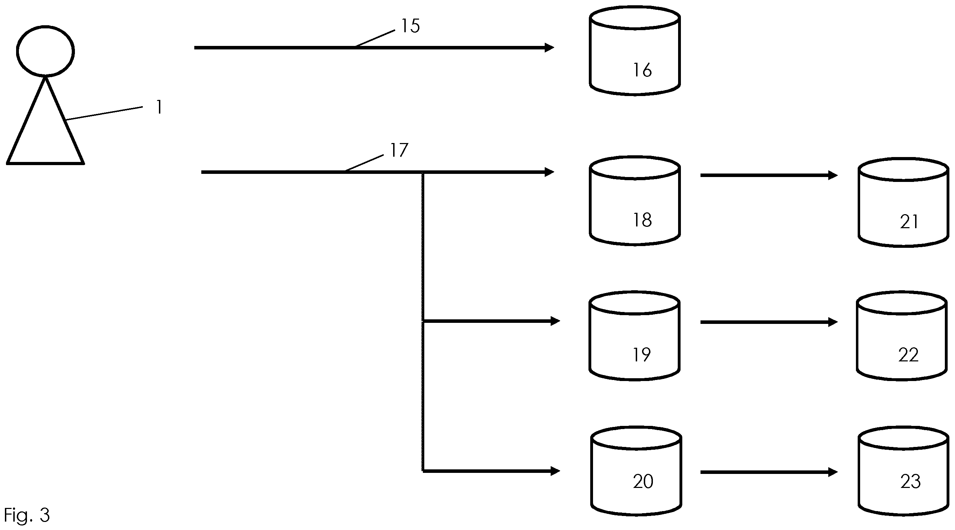

Fig. 3 zeigt schematisch einen Überblick über weitere alternative Varianten des Verfahrens gemäß Fig. 1. Der Nutzer 1 erhält bei Eingabe des "richtigen" Authentifizierungsmerkmals 15 (d.h. eines Authentifizierungsmerkmals, das einem bereits existierenden geschützten Datenbereich zugeordnet ist) Zugriff zu dem zugeordneten geschützten Datenbereich 16 im originalen, unveränderten Zustand. Bei Eingabe eines "falschen" Authentifizierungsmerkmals 17 erhält er Zugriff zu einem neu initialisierten Datenbereich 18, 19, 20, dessen Inhalt je nach Variante des Verfahrens leer sein kann (Datenbereich 18), mit einer Datenvorlage oder eigens manuell eingegebenen Daten vorbereitet sein kann (Datenbereich 19), oder künstlich gefüllt sein kann (Datenbereich 20), z.B. mit zumindest teilweise synthetisierten Daten. Die Datenbereiche 18, 19 und 20 können je nach Konfiguration zusätzlich um nicht vertrauliche, gemeinsame Daten oder Informationen angereichert werden, sodass die weiteren Varianten 21, 22, 23 entstehen.

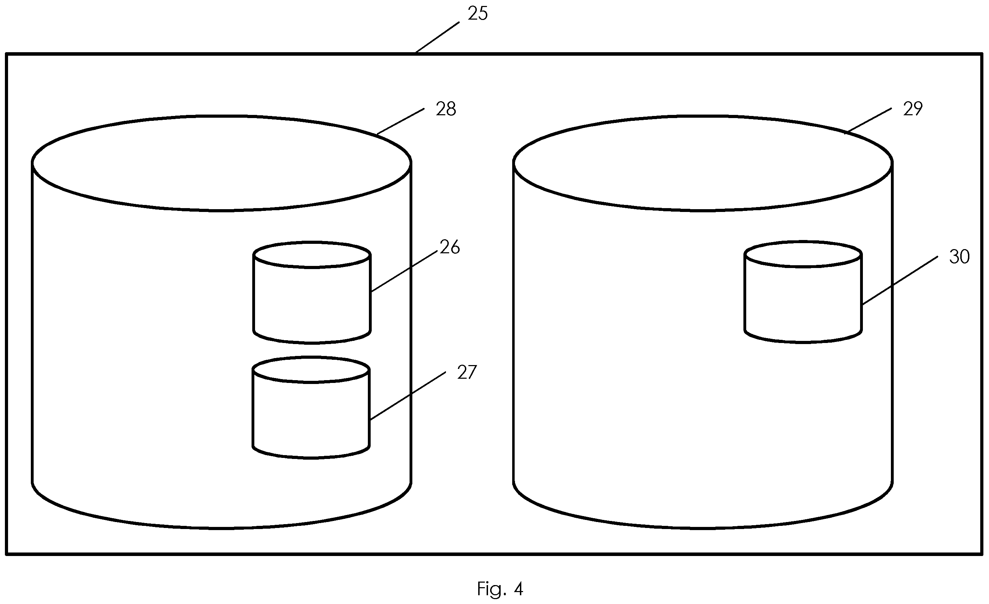

Fig. 4 zeigt schematisch eine Variante eines Speichermediums 25, bei der der geschützte Datenbereich 26 sowie ein neu initialisierter Datenbereich 27 innerhalb eines gemeinsamen Datenbereichs 28 vorgesehen sind. Der gemeinsame Datenbereich 28 enthält dabei die vom vorliegenden Prozess geschützten Daten (sowohl gemeinsame Daten als auch Daten mehrerer geschützter Bereiche), unabhängig davon, welches spezifische Authentifizierungsmerkmal X oder Y genutzt wird, d.h. unabhängig von einem bestimmten Authentifizierungsmerkmal. Demgegenüber sind die geschützten Datenbereiche 26, 27 einem bestimmten Authentifizierungsmerkmal (zum Beispiel Datenbereich 26 dem Authentifizierungsmerkmal X und Datenbereich 27 dem Authentifizierungsmerkmal Y) zugeordnet und es kann auf diese Datenbereiche jeweils nur mit einem spezifisch zugeordneten Authentifizierungsmerkmal Zugriff erlangt werden. Demzufolge sind die geschützten Datenbereiche 26, 27 jeweils spezifisch mit einem bestimmten Authentifizierungsmerkmal assoziiert. Der gemeinsame Datenbereich 28 ist dabei so eingerichtet, dass auf ihn mit jedem Authentifizierungsmerkmal Zugriff erhalten werden kann, das einem innerhalb des gemeinsamen Datenbereichs 28 angeordneten geschützten Datenbereich 26, 27 zugeordnet ist. Der gemeinsame Datenbereich 28 kann dabei optional verschlüsselt sein, wobei ein Mehr-Schlüssel-System eingesetzt werden kann, damit der gemeinsame Datenbereich 28 mit verschiedenen Schlüsseln (als Beispiele für Authentifizierungsmerkmale X und Y) entschlüsselt und darauf zugegriffen werden kann.

Alternativ kann die Kapselung auch durch ein Zwei- oder Mehr-Faktoren-System erreicht werden. Beispielsweise kann ein erstes Authentifizierungsmerkmal Z den Zugriff auf den gemeinsamen Bereich 28 erlauben und ein zweites Authentifizierungsmerkmal X oder Y über den Zugriff auf einen geschützten Datenbereich 26, 27 innerhalb des gemeinsamen Datenbereichs 28 entscheiden. Wird das erste Authentifizierungsmerkmal Z "falsch" eingegeben, kann ein neuer gemeinsamer Datenbereich 29 initialisiert werden und es wird darauf Zugriff zugelassen, wonach ein Zugriff auf die geschützten Datenbereiche 26, 27 im anderen gemeinsamen Datenbereich 28 nicht mehr möglich ist, auch nicht mit einem "korrekten" (d.h. bereits zugeordneten) zweiten Authentifizierungsmerkmal X oder Y. D.h. bei Empfang eines zweiten Authentifizierungsmerkmals X oder Y, selbst wenn es einem geschützten Datenbereich 26, 27 in einem anderen gemeinsamen Datenbereich 28 zugeordnet ist, wird im neuen gemeinsamen Datenbereich 29 ein neuer geschützter Datenbereich 30 initialisiert und darauf Zugriff zugelassen. Als Authentifizierungsmerkmal können im Rahmen dieser Offenbarung z.B. Kennwörter, biometrische Merkmale oder Hardware-Tokens, oder Kombinationen davon, verwendet werden.

Gemäß einem Anwendungsbeispiel der in Fig. 4 gezeigten Architektur können auf einem Speichermedium 25 vom Anwender alle Dokumente zu einem bestimmten Themenbereich geschützt werden, wobei alle Dokumente direkt oder indirekt (d.h. über dem gemeinsamen Datenbereich 28 untergeordnete oder darin gekapselte geschützte Datenbereiche 26, 27) im gemeinsamen Datenbereich 25 gespeichert sind. Die Dokumente zu einem bestimmten Subbereich sind nur mit dem Authentifizierungsmerkmal X zugänglich; mit dem Authentifizierungsmerkmal Y hat der Anwender manuell diese Dokumente ausgetauscht, so dass bei einem erzwungenen Zugriff Dritter kein Verdacht der weiteren Verschlüsselung entstehen kann, da die Dokumente in ihrer Gesamtheit vollständig sind.

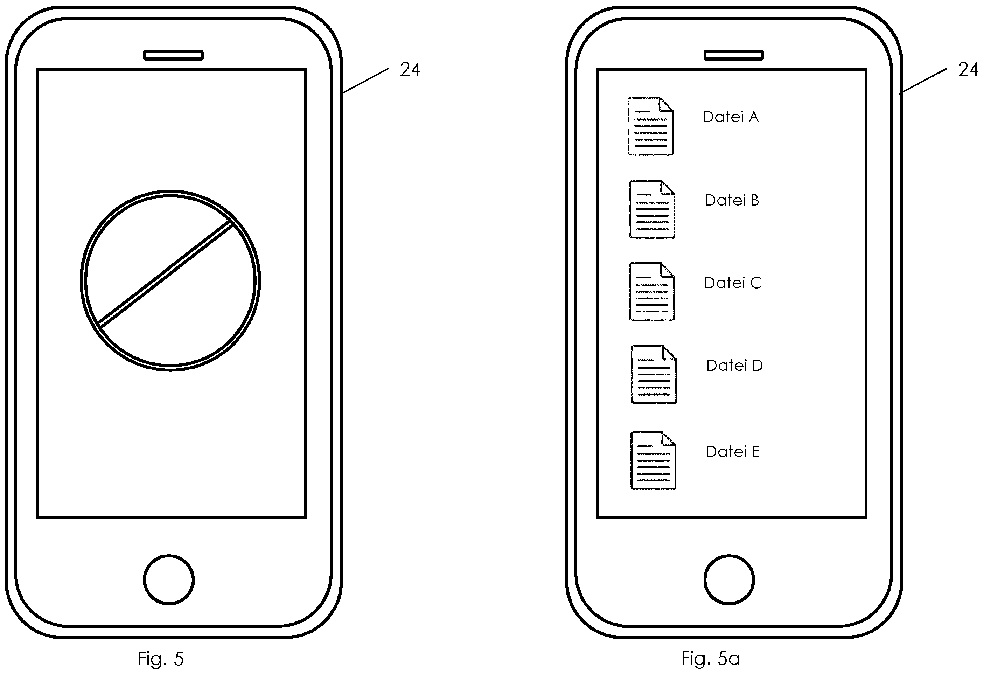

Fig. 5 und Fig. 5a stellen zur Illustration den traditionellen Weg der Zugangsbeschränkung aus Nutzersicht dar: bei Eingabe eines falschen Authentifizierungsmerkmals auf dem Endgerät 24 erhält der Nutzer keinen Zugriff (i.d.R. mit Hinweis auf den nicht gewährten Zugriff); bei Eingabe des richtigen Authentifizierungsmerkmals erhält der Nutzer uneingeschränkten Zugriff auf die Benutzerdaten, die in diesem Beispiel schematisch als Dateien A, B, C, D und E dargestellt sind.

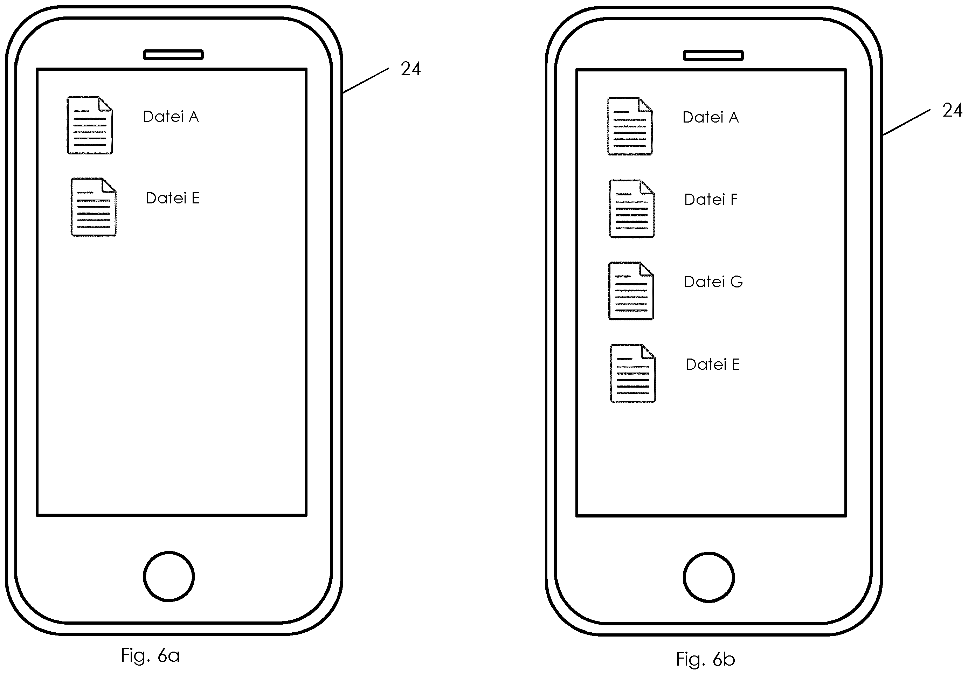

Im Unterschied zu Fig. 5 kann der Nutzer bei den in Fig. 6a-b gezeigten Varianten des offenbarten Verfahrens vorhandene Dateien als (i) nicht sensibel (Datei A und Datei E) oder (ii) sensibel (Datei B, C und D) definieren. Die nicht sensiblen Dateien sind auch bei einem eingeschränkten Zugang zugänglich. Sie sind in einem gemeinsamen Datenbereich auf dem Speichermedium des Endgeräts 24 gespeichert. Im Fall der Eingabe des richtigen Authentifizierungsmerkmals erhält der Nutzer wie in Fig. 5a uneingeschränkten Zugriff auf alle Dateien.

Der Unterschied wirkt sich erst bei der Eingabe eines falschen Authentifizierungsmerkmals aus. Im Fall der Eingabe eines falschen Authentifizierungsmerkmals wird in der in Fig. 6a gezeigten Variante der Zugang auf die nicht sensiblen Dateien, die in einem gemeinsamen geschützten Datenbereich gespeichert sind, dennoch gewährt. Die sensiblen Dateien, die in einem anderen geschützten Datenbereich gespeichert sind, können nicht angezeigt werden und der Zugang zu diesen Dateien wird nicht zugelassen. Bei der in Fig. 6b gezeigten Variante werden die sensiblen Dateien durch andere Dateien (Datei F und Datei G) ersetzt, die je nach gewählter Konfiguration manuell vorbereitet (z.B. in einer Datenbereichsvorlagen) oder passend künstlich generiert sein können.

## Patentansprüche

1. Computerimplementiertes Verfahren zur Zugangssteuerung zu geschützten Datenbereichen auf einem Speichermedium (25), das Verfahren umfassend die folgenden Schritte:
- Empfangen eines Authentifizierungsmerkmals (4);
- Suchen nach einem geschützten Datenbereich, der dem empfangenen Authentifizierungsmerkmal (4) zugeordnet ist, auf dem Speichermedium (25);
- Feststellen, dass dem empfangenem Authentifizierungsmerkmal kein geschützter Datenbereich (26) zugeordnet ist;
und **gekennzeichnet durch** die diesen Schritten nachfolgenden Schritte:
- Initialisieren eines neuen geschützten Datenbereichs (27); und
- Zulassen des Zugriffs auf den neu initialisierten geschützten Datenbereich (27).

2. Verfahren gemäß Anspruch 1, **dadurch gekennzeichnet, dass** gleichzeitig mit dem Zulassen des Zugriffs auf den neu initialisierten geschützten Datenbereich (27) ein Zugriff auf einen gemeinsamen Datenbereich (28) auf dem Speichermedium zugelassen wird.

3. Verfahren gemäß Anspruch 2, **dadurch gekennzeichnet, dass** der gemeinsame Datenbereich (28) und alle geschützten Datenbereiche (26, 27) auf dem Speichermedium verschlüsselt gespeichert sind.

4. Verfahren gemäß einem der Ansprüche 1 bis 3, **dadurch gekennzeichnet, dass** der neue geschützte Datenbereich (27) entsprechend einer Datenbereichsvorlage initialisiert wird.

5. Verfahren nach einem der Ansprüche 1 bis 4, **dadurch gekennzeichnet, dass** das Authentifizierungsmerkmal (4) ein Passwort, ein geheimer Schlüssel oder ein biometrisches Merkmal ist.

6. Verfahren nach einem der Ansprüche 1 bis 5, **dadurch gekennzeichnet, dass** vor dem Zulassen des Zugriffs ein weiteres Authentifizierungsmerkmal empfangen und mit einem gemeinsamen Authentifizierungsmerkmal verglichen und eine Übereinstimmung festgestellt wird.

7. Verwendung eines Verfahrens nach einem der Ansprüche 1 bis 6 für die Zugangssteuerung zu Benutzerdaten einer Anwendung auf einem Endgerät (24), wobei beim Starten der Anwendung das Authentifizierungsmerkmal eingegeben wird und die Anwendung Benutzerdaten aus jenem geschützten Datenbereich lädt, auf den der Zugriff zugelassen wurde.

8. Verwendung eines Verfahrens nach einem der Ansprüche 1 bis 6 für die Zugangssteuerung zu Benutzerdaten eines Betriebssystems eines Endgeräts (24), wobei beim Starten des Betriebssystems das Authentifizierungsmerkmal eingegeben wird und das Betriebssystem Benutzerdaten aus jenem geschützten Datenbereich lädt, auf den der Zugriff zugelassen wurde.

9. Endgerät (24) umfassend ein Speichermedium mit mindestens einem geschützten Datenbereich, wobei dem mindestens einen geschützten Datenbereich jeweils ein Authentifizierungsmerkmal zugeordnet ist, wobei die verschiedenen geschützten Datenbereichen (6, 7) zugeordneten Authentifizierungsmerkmale verschieden sind, wobei das Endgerät (24) eingerichtet ist, beim Empfangen eines Authentifizierungsmerkmals, das keinem der geschützten Datenbereiche (6, 7) auf dem Speichermedium zugeordnet ist, einen neuen geschützten Datenbereich (8) zu initialisieren und einen Zugriff auf den neu initialisierten geschützten Datenbereich (8) zuzulassen.

10. Endgerät gemäß Anspruch 9, **dadurch gekennzeichnet, dass** der mindestens eine geschützte Datenbereich (6, 7) des Speichermediums verschlüsselt ist.

11. Endgerät gemäß Anspruch 10, **dadurch gekennzeichnet, dass** ein Schlüssel zum Entschlüsseln eines geschützten Datenbereichs (6, 7) aus dem diesem Datenbereich zugeordneten Authentifizierungsmerkmal ableitbar ist.

12. Endgerät gemäß einem der Ansprüche 9 bis 11, **dadurch gekennzeichnet, dass** das Speichermedium zusätzlich einen gemeinsamen Datenbereich aufweist, wobei das Endgerät (24) eingerichtet ist, beim Empfangen eines keinem der geschützten Datenbereiche (6, 7) auf dem Speichermedium zugeordneten Authentifizierungsmerkmals einen neuen geschützten Datenbereich (8) zu initialisieren und einen Zugriff auf den neu initialisierten geschützten Datenbereich (8) und auf den gemeinsamen Datenbereich zuzulassen.

13. Endgerät gemäß Anspruch 12, **dadurch gekennzeichnet, dass** der gemeinsame Datenbereich des Speichermediums verschlüsselt ist.
